# EUROPEAN PATENT APPLICATION

(11) **EP 4 130 304 A1**
(43) Date of publication of application: **08.02.2023**
(21) Application number: 20928444.7
(22) Date of filing: 02.04.2020
(51) Int. Cl.: C21D 8/12, C22C 38/00, C22C 38/60

(54) **NON-ORIENTED ELECTROMAGNETIC STEEL SHEET AND METHOD FOR PRODUCING SAME**

(71) Applicant: NIPPON STEEL CORPORATION, Chiyoda-ku Tokyo 100-8071 (JP)
(72) Inventor: YASHIKI, Hiroyoshi, Tokyo 100-8071 (JP); NATORI,Yoshiaki, Tokyo 100-8071 (JP); TOMITA, Miho, Tokyo 100-8071 (JP); TAKEDA, Kazutoshi, Tokyo 100-8071 (JP); MATSUMOTO, Takuya, Tokyo 100-8071 (JP)
(74) Representative: Vossius & Partner Patentanwälte Rechtsanwälte mbB
(86) International application number: PCT/JP2020/015170
(87) International publication number: WO 2021/199400

(57) **Abstract**

A chemical composition of a base metal of a non-oriented electrical steel sheet contains, by mass%, C: 0.0050% or less, Si: 3.8% to 5.0%, Mn: exceeding 0.2% and less than 2.0%, P: 0.030% or less, S: 0.0030% or less, Al: 0.005% or more and less than 0.050%, N: 0.0005% to 0.0030%, Ti: less than 0.0050%, Nb: less than 0.0050%, Zr: less than 0.0050%, V: less than 0.0050%, Cu: less than 0.20%, Ni: less than 0.50%, Sn: 0% to 0.10%, Sb: 0% to 0.10%, a remainder: Fe and impurities. [Si + 0.5 × Mn ≥ 4.3] is satisfied and the average grain size of the base metal is in a range of 10 to 80 µm.

## Description

### [Technical Field of the Invention]

The present invention relates to a non-oriented electrical steel sheet and a method of manufacturing a non-oriented electrical steel sheet.

### [Related Art]

In recent years, the frequency control of a drive power supply has been capable of being performed with the development of a drive system for a motor. Along with this, there is an increasing demand for motors that operate at a variable speed or rotate at a high speed above commercial frequencies. The centrifugal force acting on the rotor of a motor, which rotate at a high speed, increases in proportion to the square of the rotation speed. For this reason, a steel material used for the rotor of a high-speed motor gradually has required high strengthening.

Further, in an embedded magnet type inverter control motor that is increasingly employed for a drive motor of a hybrid vehicle or an electric vehicle, a compressor motor of an air conditioner, or the like, a slit is provided at the outer circumferential portion of a rotor and a magnet is embedded in the slit. For this reason, stress is concentrated on a narrow bridge portion, such as a portion between the outer circumference of the rotor and the slit, due to a centrifugal force during the high-speed rotation of the motor. Accordingly, a core material used for the rotor requires strength that allows the rotor to not be deformed and fractured by a centrifugal force.

In addition, eddy current is generated in a high-speed rotary motor by high-frequency magnetic flux, so that the efficiency of the motor is lowered and heat is generated. Since the magnet embedded in the rotor is demagnetized in a case where the amount of generated heat is increased, low iron loss in a high frequency range is also required.

Methods using solid solution strengthening, precipitation hardening, crystal grain refinement strengthening, composite structure strengthening, and the like are known as a method of improving the strength of a steel sheet. However, since magnetic characteristics deteriorate and workability during cold rolling deteriorates in many of these methods, it is generally extremely difficult to achieve both strength and magnetic characteristics at a high level.

Against this background, attempts to realize excellent magnetic characteristics and high strength are made in, for example, Patent Documents 1 to 3.

### [Prior Art Document]

### [Patent Document]

[Patent Document 1] Japanese Unexamined Patent Application, First Publication No. 2004-300535
[Patent Document 2] Japanese Unexamined Patent Application, First Publication No. 2007-186791
[Patent Document 3] Japanese Unexamined Patent Application, First Publication No. 2012-140676

### [Disclosure of the Invention]

### [Problems to be Solved, by the Invention]

However, in order to realize the energy-saving characteristics required for motors for electric vehicles or hybrid vehicles in recent years, low iron loss has been insufficient and high cost has been required in the techniques disclosed in Patent Documents 1 to 3.

The present invention has been made to solve the above-mentioned problems, and an object of the present invention is to stably provide a non-oriented electrical steel sheet, which has high strength and excellent magnetic characteristics, at a low cost.

### [Means for Solving the Problem]

The gist of the present invention is the following non-oriented electrical steel sheet and a method of the non-oriented electrical steel sheet.
(1) A non-oriented electrical steel sheet including, as a chemical composition of a base metal, by mass%:
   C: 0.0050% or less;
   Si: 3.8% to 5.0%;
   Mn: exceeding 0.2% and less than 2.0%;
   P: 0.030% or less;
   S: 0.0030% or less;
   Al: 0.005% or more and less than 0.050%;
   N: 0.0005% to 0.0030%;
   Ti: less than 0.0050%;
   Nb: less than 0.0050%;
   Zr: less than 0.0050%;
   V: less than 0.0050%;
   Cu: less than 0.20%;
   Ni: less than 0.50%;
   Sn: 0% to 0.10%;
   Sb: 0% to 0.10%; and
   a remainder: Fe and impurities,
   in which Expression (i) is satisfied, and
   the average grain size of the base metal is in a range of 10 to 80 µm,

      Si + 0.5 × Mn ≥ 4.3 ... (i)
   here, an element symbol in Expression (i) is a content (mass%) of each element.
(2) The non-oriented electrical steel sheet according to (1),
   in which the tensile strength is 650 MPa or more.
(3) The non-oriented electrical steel sheet according to (1) or (2),
   in which the chemical composition contains, by mass%, one or two selected from Sn: 0.005% to 0.10% and Sb: 0.005% to 0.10%.
(4) The non-oriented electrical steel sheet according to any one of (1) to (3), further including:
   an insulation coating that is provided on a surface of the base metal.
(5) A method of manufacturing the non-oriented electrical steel sheet according to any one of (1) to (4), the method including:
   performing hot rolling on a steel ingot that has the chemical composition according to any one of (1) to (3) and then performing the following Step 1 or 2,
   (Step 1) performing cold rolling and final annealing in order without annealing of a hot-rolled sheet, and
   (Step 2) performing annealing of a hot-rolled sheet at a temperature of 950°C or lower and then performing the cold rolling and the final annealing in order,
   in which the final annealing is performed in a state where a soaking temperature is in a range of 750°C to 1000°C and a soaking time is in a range of 1 to 300 s.

### [Effects of the Invention]

According to the present invention, it is possible to stably obtain a non-oriented electrical steel sheet, which has high strength and excellent magnetic characteristics, at a low cost.

### [Embodiments of the Invention]

As the result of diligent examination performed by the present inventors in order to solve the above-mentioned problems, the present inventors have obtained the following knowledge.

Si, Mn, and Al are elements that have an effect of increasing the electric resistance of steel to reduce eddy-current loss. Further, these elements are elements that also contribute to the high-strengthening of steel.

Among the above-mentioned elements, Si is an element that most efficiently contributes to an increase in electric resistance and is an element that also most efficiently contributes to an increase in strength. Like Si, Al also has an effect of efficiently increasing electric resistance. However, there is a problem that the toughness of steel is reduced and workability deteriorates in a case where a large amount of Al and a large amount of Si are added. In contrast, Mn has a lower effect of increasing the electric resistance than Si and Al, but has an advantage that workability is less likely to deteriorate.

Accordingly, in this embodiment, the Si content and the Mn content are adjusted to be in appropriate ranges, so that workability is ensured while high-strengthening and the improvement of magnetic characteristics are achieved.

In addition, it is also important to control grain sizes to order to achieve high-strengthening and the improvement of magnetic characteristics. In terms of high strengthening, it is desirable that crystals in steel are fine particles.

Further, iron loss, particularly, iron loss in a high frequency range needs to be improved in the magnetic characteristics of a non-oriented electrical steel sheet used as the material of cores of drive motors for electric vehicles and hybrid vehicles and motors for compressors of air conditioners. Iron loss mainly consists of hysteresis loss and eddy-current loss. Here, it is preferable that crystal grains are coarsened in order to reduce hysteresis loss and it is preferable that crystal grains are refined in order to reduce eddy-current loss. That is, there is a trade-off relationship between both hysteresis loss and eddy-current loss.

Accordingly, as the result of examination further performed by the present inventors, the present inventors have found that there is the range of a preferred grain size for achieving high-strengthening and a reduction in high-frequency iron loss and the Al content and N content need to be adjusted to be in appropriate ranges.

The non-oriented electrical steel sheet according to this embodiment is made on the basis of the above-mentioned knowledge. Each requirement for the non-oriented electrical steel sheet according to this embodiment will be described in detail below.

### 1. Overall configuration

Since having particularly high strength, the non-oriented electrical steel sheet according to the embodiment of the present invention is suitable for a rotor. Further, since also being excellent in magnetic characteristics, the non-oriented electrical steel sheet according to the embodiment of the present invention is also suitable for a stator. Furthermore, it is preferable that the non-oriented electrical steel sheet according to the embodiment of the present invention includes an insulation coating on the surface of a base metal to be described below.

### 2. Chemical composition of base metal

The reason why each element is to be limited is as follows. In the following description, "%" related to the content means "mass%". Further, in this embodiment, a numerical range expressed using "to" means a range that includes numerical values written in the front and rear of "to" as a lower limit and an upper limit.

### C: 0.0050% or less

C (carbon) is an element that causes the deterioration of iron loss. In a case where the C content exceeds 0.0050%, the deterioration of iron loss occurs in the non-oriented electrical steel sheet. For this reason, good magnetic characteristics cannot be obtained. Accordingly, the C content is set to 0.0050% or less. It is preferable that the C content be 0.0040% or less and it is more preferable that the C content be 0.0035% or less. C contributes to the high-strengthening of the steel sheet. Accordingly, in a case where a user wants to obtain the effect thereof, it is preferable that the C content be 0.0005% or more and it is more preferable that the C content be 0.0010% or more.

### Si: 3.8% to 5.0%

Si (silicon) is an element that increases the electric resistance of steel to reduce eddy-current loss and to improve high-frequency iron loss. Further, since Si has large solid solution strengthening capability, Si is an element also effective for the high-strengthening of a steel sheet. On the other hand, in a case where the Si content is excessive, workability significantly deteriorates and it is difficult to perform cold rolling. Accordingly, the Si content is set to be in a range of 3.8% to 5.0%. It is preferable that the Si content be 3.9% or more and it is more preferable that the Si content be 4.0% or more. Further, it is preferable that the Si content be 4.8% or less and it is more preferable that the Si content be 4.5% or less.

### Mn: exceeding 0.2% and less than 2.0%

Mn (manganese) is an element that is effective to increase the electric resistance of steel to reduce eddy-current loss and to improve high-frequency iron loss. However, in a case where the Mn content is excessive, magnetic flux density is significantly reduced. Accordingly, the Mn content is set to exceed 0.2% and be less than 2.0%. It is preferable that the Mn content be 0.3% or more, it is more preferable that the Mn content is 0.4% or more, it is still more preferable that the Mn content exceeds 0.5%, and it is even more preferable that the Mn content be 0.6% or more. Further, it is preferable that the Mn content be 1.8% or less, it is more preferable that the Mn content be 1.7% or less, it is still more preferable that the Mn content be less than 1.5%, it is even more preferable that the Mn content be 1.4% or less, it is yet more preferable that the Mn content be 1.2% or less, and it is a lot more preferable that the Mn content be 1.0% or less.

In the present invention, the Si content and the Mn content are appropriately controlled to ensure the electric resistance of steel. For this reason, in addition to each of the Si content and the Mn content being in the above-mentioned ranges, it is necessary to satisfy the following expression (i). It is preferable that the left value of Expression (i) be 4.4 or more and it is more preferable that the left value of Expression (i) be 4.5 or more.

Si + 0.5 × Mn ≥ 4.3 ... (i)

Here, an element symbol in Expression (i) is a content (mass%) of each element.

The purpose of Expression (i) is as follows.

As described above, in this embodiment, the Si content and the Mn content are adjusted to be in appropriate ranges, so that workability is ensured while high-strengthening and the improvement of magnetic characteristics are achieved. First, focusing on Si, Si is an element that increases the electric resistance of steel to reduce eddy-current loss and to improve high-frequency iron loss. Further, since Si has large solid solution strengthening capability, Si is an element also effective for the high-strengthening of a steel sheet. On the other hand, in a case where the Si content is excessive, workability significantly deteriorates and it is difficult to perform cold rolling. From this point of view, the Si content is set to be in a range of 3.8% to 5.0%.

Comparing the range of the Si content with Expression (i), Expression (i) is satisfied regardless of the Mn content in a case where the Si content is in a range of 4.3% to 5.0%. Accordingly, in this case, good magnetic characteristics are obtained (on the premise that other requirements of the non-oriented electrical steel sheet according to this embodiment are satisfied). In addition, since the Si content satisfies the requirement of this embodiment, the non-oriented electrical steel sheet has high strength. On the other hand, Si is an element disadvantageous in terms of workability, but workability is also good since the Si content is at least 5.0% or less.

On the other hand, in a case where the Si content is 3.8% or more and less than 4.3%, Expression (i) is not satisfied by only the Si content. That is, there is a possibility that desired magnetic characteristics are not obtained from only Si. Accordingly, Mn is used to compensate for the lack of magnetic characteristics. That is, the Mn content increased in a range exceeding 0.2% and less than 2.0% so that Expression (i) is satisfied. Accordingly, the magnetic characteristics of the non-oriented electrical steel sheet are improved. On the other hand, since Si is 3.8% or more, the strength of the non-oriented electrical steel sheet is also increased. With regard to workability, since the Si content is less than 4.3%, workability tends to be improved as compared to the above-mentioned case (that is, a case where the Si content is 4.3% or more). Here, since it is difficult for Mn to affect workability, workability is less likely to deteriorate even if the Mn content is increased so that Expression (i) is satisfied. Further, an increase in the Mn content is effective at increasing strength though it is not as effective as Si.

As described above, in this embodiment, the Si content and the Mn content have values in the above-mentioned numerical ranges and are set so that Expression (i) is satisfied. Accordingly, workability can be ensured while the high-strengthening of the non-oriented electrical steel sheet and the improvement of the magnetic characteristics of the non-oriented electrical steel sheet are achieved.

### P: 0.030% or less

P (phosphorus) is included in steel as an impurity, and the ductility of the steel sheet is significantly reduced in a case where the P content is excessive. Accordingly, the P content is set to 0.030% or less. It is preferable that the P content is 0.025% or less and is it more preferable that the P content is 0.020% or less.

### S: 0.0030% or less

S (sulfur) is an element that forms the fine precipitate of MnS to increase iron loss and to cause the magnetic characteristics of the steel sheet to deteriorate. Accordingly, the S content is 0.0030% or less. It is preferable that the S content is 0.0025% or less and it is more preferable that the S content is 0.0020% or less. Since there is a concern that an extreme reduction in the S content causes an increase in manufacturing cost, it is preferable that the S content be 0.0001% or more, it is more preferable that the S content be 0.0003% or more, and it is still more preferable that the S content be 0.0005% or more.

### Al: 0.005% or more and less than 0.050%

Al (aluminum) is an element that is effective at stably refining crystal grains when combined with N and forming AlN. It is necessary to contain 0.005% or more of Al in order to exhibit this effect. On the other hand, in a case where 0.050% or more of Al is contained, an effect of refining crystal grains is reduced. Accordingly, the Al content is set to 0.005% or more and be less than 0.050%. It is preferable that the Al content be 0.008% or more, it is more preferable that the Al content be 0.010% or more, it is still more preferable that the Al content be 0.015% or more, and it is even more preferable that the Al content be 0.020% or more. Further, it is preferable that the Al content be 0.048% or less and it is more preferable that the Al content be 0.045% or less. In this specification, the Al content means the total Al content included in a base metal.

### N: 0.0005% to 0.0030%

N (nitrogen) is an element that is effective at stably refining crystal grains when combined with Al and forming A1N. On the other hand, in a case where a large amount of N is contained, excessive AlN is formed and the deterioration of iron loss is caused. Accordingly, the N content is set to be in a range of 0.0005% to 0.0030%. It is preferable that the N content be 0.0007% or more and it is more preferable that the N content be 0.0010% or more. Further, it is preferable that the N content be 0.0027% or less and it is more preferable that the N content be 0.0025% or less.

### Ti: less than 0.0050%

Ti (titanium) is an element that is unavoidably mixed and may form precipitates (carbide or nitride) by combining with carbon or nitrogen. In a case where carbide or nitride is formed, these precipitates themselves cause magnetic characteristics to deteriorate. In addition, these precipitates inhibit the growth of crystal grains during final annealing to cause magnetic characteristics to deteriorate. Accordingly, the Ti content is set to be less than 0.0050%. It is preferable that the Ti content be 0.0040% or less, it is more preferable that the Ti content be 0.0030% or less, and it is still more preferable that the Ti content be 0.0020% or less. Since there is a concern that an extreme reduction in the Ti content causes an increase in manufacturing cost, it is preferable that the Ti content be 0.0005% or more.

### Nb: less than 0.0050%

Nb (niobium) is an element that forms precipitates (carbide or nitride) by combining with carbon or nitrogen to contribute to high-strengthening, but these precipitates themselves cause magnetic characteristics to deteriorate. Accordingly, the Nb content is set to be less than 0.0050%. It is preferable that the Nb content be 0.0040% or less, it is more preferable that the Nb content be 0.0030% or less, and it is still more preferable that the Nb content be 0.0020% or less. Lower Nb content be more preferable and it is preferable that the Nb content be equal to or lower than a measurement limit.

### Zr: less than 0.0050%

Zr (zirconium) is an element that forms precipitates (carbide or nitride) by combining with carbon or nitrogen to contribute to high-strengthening, but these precipitates themselves cause magnetic characteristics to deteriorate. Accordingly, the Zr content is set to be less than 0.0050%. It is preferable that the Zr content be 0.0040% or less, it is more preferable that the Zr content be 0.0030% or less, and it is still more preferable that the Zr content be 0.0020% or less. A lower Zr content is more preferable and it is preferable that the Zr content equal to or lower than a measurement limit.

### V: less than 0.0050%

V (vanadium) is an element that forms precipitates (carbide or nitride) by combining with carbon or nitrogen to contribute to high-strengthening, but these precipitates themselves cause magnetic characteristics to deteriorate. Accordingly, the V content is set to be less than 0.0050%. It is preferable that the V content be 0.0040% or less, it is more preferable that the V content be 0.0030% or less, and it is still more preferable that the V content be 0.0020% or less. A lower V content be more preferable and it is preferable that the V content be equal to or lower than a measurement limit.

### Cu: less than 0.20%

Cu (copper) is an element that is unavoidably mixed. The intentional addition of Cu causes an increase in the manufacturing cost of the steel sheet. Accordingly, in the present invention, Cu does not need to be actively added and may be added at a level of an impurity. The Cu content be set to be less than 0.20% that is the maximum value of Cu to be unavoidably mixed in a manufacturing step. It is preferable that the Cu content be 0.15% or less and it is more preferable that the Cu content be 0.10% or less. The lower limit of the Cu content is not particularly limited, but there is a concern that an extreme reduction in the Cu content causes an increase in manufacturing cost. For this reason, it is preferable that the Cu content be 0.001% or more, it is more preferable that the Cu content be 0.003% or more, and it is still more preferable that the Cu content be 0.005% or more.

### Ni: less than 0.50%

Ni (nickel) is an element that is unavoidably mixed. However, since also being an element that improves the strength of the steel sheet, Ni may also be intentionally added. Here, since Ni is expensive, the Ni content is set to be less than 0.50% in a case where Ni is to be intentionally added. It is preferable that the Ni content be 0.40% or less and it is more preferable that the Ni is 0.30% or less. The lower limit of the Ni content is not particularly limited, but there is a concern that an extreme reduction in the Ni content causes an increase in manufacturing cost. For this reason, it is preferable that the Ni content be 0.001% or more, it is more preferable that the Ni content be 0.003% or more, and it is still more preferable that the Ni content be 0.005% or more.

### Sn: 0% to 0.10%

### Sb: 0% to 0.10%

Sn (tin) and Sb (antimony) are elements that are useful to ensure low iron loss by being segregated on the surface and suppressing oxidation and nitriding during annealing. Further, Sn and Sb also have an effect of improving a texture by being segregated at grain boundaries and an effect of increasing magnetic flux density. For this reason, at least one of Sn and Sb may be contained as necessary. However, in a case where the contents of these elements are excessive, there is a possibility that the toughness of steel is reduced, which makes it difficult for cold rolling to be performed. Accordingly, each of the Sn content and the Sb content is set to 0.10% or less. It is preferable that each of the Sn content and the Sb content be 0.06% or less. In a case where a user wants to obtain the above-mentioned effects, it is preferable that at least one of the Sn content and the Sb content be set to 0.005% or more and it is more preferable that at least one of the Sn content and the Sb content be set to 0.010% or more.

In the chemical composition of the base metal of the non-oriented electrical steel sheet according to the embodiment of the present invention, a remainder is Fe and impurities. Here, "impurities" are raw materials, such as ore and scrap, and components to be mixed due to various factors of manufacturing steps in a case where steel is to be industrially manufactured, and mean materials that are allowed within a range where the present invention is not adversely affected.

The Cr content and the Mo content are not particularly specified as impurity elements. Even if the non-oriented electrical steel sheet according to this embodiment contains 0.5% or less of these elements, the effects of the present invention are not particularly affected. Further, even if each of Ca and Mg is contained in a range of 0.002% or less, the effects of the present invention are not particularly affected. Even if rare earth elements (REM) are contained in a range of 0.004% or less, the effects of the present invention are not particularly affected.

O is also an impurity element, but the effects of the present invention are not affected even if O is contained in a range of 0.05% or less. Since O may be mixed in an annealing step, the effects of the present invention are not particularly affected even if O is contained in a range of 0.01% or less in the content of a slab stage (that is, a ladle value).

Further, elements, such as Pb, Bi, As, B, and Se, may be contained in addition to the above-mentioned elements, but the effects of the present invention do not deteriorate in a case where each of the contents thereof is in a range of 0.0050% or less.

The chemical composition of the above-mentioned base metal may be measured using a general analysis method. For example, the composition of steel may be measured using inductively coupled plasma-atomic emission spectrometry (ICP-AES). C and S may be measured using a combustion-infrared absorption method, N may be measured using an inert gas fusion-thermal conductivity method, and O may be measured using an inert gas fusion-nondispersive infrared absorption method.

### 3. Grain size

As described above, in terms of high strengthening, it is desirable that crystals in steel be fine particles. In addition, it is preferable that crystal grains be coarsened in order to reduce hysteresis loss, and it is preferable that crystal grains be refined in order to reduce eddy-current loss.

In a case where the average grain size of the base metal is less than 10 µm, hysteresis loss significantly deteriorates and it is difficult for magnetic characteristics to be improved. On the other hand, in a case where the average grain size exceeds 80 µm, the strength of steel is reduced. Accordingly, the average grain size of the base metal is set to be in a range of 10 to 80 µm. It is preferable that the average grain size be 12 µm or more and it is more preferable that the average grain size be 14 µm or more. Further, it is preferable that the average grain size be 70 µm or less and it is more preferable that the average grain size be 60 µm or less.

In the present invention, the average grain size of the base metal is obtained according to JIS G 0551 (2013) "steel-grain size microscopic test method".

### 4. Magnetic characteristics

In the non-oriented electrical steel sheet according to the embodiment of the present invention, "being excellent in magnetic characteristics" means that iron loss W_{10/400} is low and magnetic flux density B₅₀ is high. Here, the above-mentioned magnetic characteristics are measured on the basis of Epstein method specified in JIS C 2550-1 (2011).

### 5. Mechanical properties

In the non-oriented electrical steel sheet according to the embodiment of the present invention, "having high strength" means that a tensile strength is 650 MPa or more. It is preferable that a tensile strength is 660 MPa or more. Here, a tensile test in accordance with JIS Z 2241 (2011) is performed to measure a tensile strength.

### 6. Insulation coating

It is preferable that an insulation coating be formed on the surface of the base metal in the non-oriented electrical steel sheet according to the embodiment of the present invention as described above. Non-oriented electrical steel sheets are stacked in use after a core blank is punched out in each non-oriented electrical steel sheet. Accordingly, in a case where the insulation coating is provided on the surface of the base metal, eddy current between the sheets can be reduced and eddy-current loss can be reduced as a core.

The type of the insulation coating is not particularly limited, and a publicly known insulation coating to be used as an insulation coating for a non-oriented electrical steel sheet can be used. Examples of such an insulation coating include a composite insulation coating that includes inorganic matter as a main component and further includes organic matter. Here, the composite insulation coating is, for example, an insulation coating which includes at least one of inorganic matter, such as metal chromate, metal phosphate, or colloidal silica, a Zr compound, and a Ti compound, as a main component and in which fine organic resin particles are dispersed. Particularly, an insulation coating that uses metal phosphate, a Zr or Ti coupling agent, the carbonate or ammonium salt thereof as a starting material is preferably used in terms of reducing an environmental load during manufacturing that has been increasing in demand in recent years.

Here, the adhesion amount of the insulation coating is not particularly limited. For example, it is preferable that the adhesion amount of the insulation coating is set to be in a range of about 200 to 1500 mg/m² per one surface and it is more preferable that the adhesion amount of the insulation coating be set to be in a range of 300 to 1200 mg/m² per one surface. In a case where the insulation coating is formed so that the adhesion amount of the insulation coating is in the above-mentioned range, excellent uniformity can be maintained. In a case where the adhesion amount of the insulation coating is measured after the fact, various measurement methods publicly known can be used. For example, a method of measuring a mass difference before and after the immersion of the non-oriented electrical steel sheet in a sodium hydroxide aqueous solution, an X-ray fluorescence method using a calibration curve method, or the like may be appropriately used.

### 7. Manufacturing method

A method of manufacturing the non-oriented electrical steel sheet according to the embodiment of the present invention is not particularly limited. However, hot rolling can be performed on a steel ingot having the above-mentioned chemical composition and the following Step 1 or 2 can be performed to manufacture the non-oriented electrical steel sheet.

(Step 1) Cold rolling and final annealing are performed in order without the annealing of a hot-rolled sheet.

(Step 2) The annealing of a hot-rolled sheet is performed at a temperature of 950°C or lower and the cold rolling and the final annealing are then performed in order.

Further, in a case where an insulation coating is to be formed on the surface of the base metal, the insulation coating is formed after the final annealing. Each step will be described in detail below.

### <Hot rolling step>

The steel ingot (slab) having the above-mentioned chemical composition is heated and hot rolling is performed on the heated steel ingot, so that the hot-rolled sheet is obtained. Here, the heating temperature of the steel ingot in a case where the steel ingot is subjected to the hot rolling is not particularly specified, but it is preferable that the heating temperature of the steel ingot is set to be in a range of, for example, 1050°C to 1250°C. Further, the sheet thickness of the hot-rolled sheet subjected to the hot rolling is also not particularly specified, but it is preferable that the sheet thickness of the hot-rolled sheet subjected to the hot rolling is set to be in a range of, for example, about 1.5 to 3.0 mm in consideration of the final sheet thickness of the base metal.

### <Hot-rolled sheet annealing step>

After that, the annealing of the hot-rolled sheet may be performed in order to increase the magnetic flux density of the steel sheet. That is, a hot-rolled sheet annealing step is omitted in Step 1. The hot-rolled sheet annealing step is performed in Step 2. In a case where the hot-rolled sheet annealing step is performed, there is a concern that fracture occurs during the cold rolling in a case where annealing is performed at a high temperature exceeding 950°C. Accordingly, an annealing temperature is set to 950°C or lower. In the case of continuous annealing, it is preferable that the hot-rolled steel sheet is subjected to annealing using a soak for 10 to 150 s at a temperature of 700°C to 950°C. It is more preferable that soaking conditions are set to a temperature of 800°C to 930°C and for 10 to 150 s.

Further, in the case of box annealing, it is preferable that the hot-rolled steel sheet is subjected to annealing using a soak for 30 min to 24 h at a temperature of 600°C to 850°C. More preferably, the hot-rolled steel sheet is subjected to annealing using a soak for 1 h to 20 h at a temperature of 650°C to 800°C. Although magnetic characteristics are inferior to those in a case where the hot-rolled sheet annealing step is performed, the above-mentioned hot-rolled sheet annealing step may be omitted for reduction in cost (Step 1).

### <Pickling step>

Pickling may be performed after the annealing of the hot-rolled sheet. A scale layer formed on the surface of the base metal is removed by the pickling. Here, pickling conditions, such as the concentration of an acid to be used for pickling, the concentration of an accelerator to be used for pickling, and the temperature of pickling liquid, are not particularly limited, and may be set to publicly known pickling conditions. In a case where the annealing of the hot-rolled sheet is box annealing, it is preferable in terms of a descaling property that a pickling step is performed before the annealing of the hot-rolled sheet. In this case, pickling does not need to be performed after the annealing of the hot-rolled sheet. In a case where the annealing of the hot-rolled sheet is omitted, the pickling may be performed on the hot-rolled sheet in order to remove a scale layer from the hot-rolled sheet subjected to the hot rolling.

### <Cold rolling step>

In Step 1, cold rolling is performed after the hot rolling step. In Step 2, cold rolling is performed after the pickling (cold rolling may be performed after the hot-rolled sheet annealing step in a case where the annealing of the hot-rolled sheet is performed by box annealing.) In the cold rolling, a pickled sheet from which the scale layer is removed is subjected to rolling at, for example, a rolling reduction that allows the final sheet thickness of the base metal to be in a range of 0.10 to 0.35 mm.

### <Final annealing step>

Final annealing is performed after the cold rolling. It is preferable that a continuous annealing furnace is used for the final annealing in the method of manufacturing the non-oriented electrical steel sheet according to this embodiment. The final annealing step is an important step to control the average grain size of the base metal.

Here, with regard to final annealing conditions, it is preferable that a soaking temperature be set to be in a range of 750°C to 1000°C, a soaking time be set to be in a range of 1 to 300 s, an atmosphere be set to a mixed atmosphere of H₂ and N₂ in which the ratio of H₂ is in a range of 10 volume% to 100 volume% (that is, H₂ + N₂ = 100 volume%), and the dew point of the atmosphere is set to 30°C or lower.

In a case where a soaking temperature is lower than 750°C, unrecrystallized structures are increased and iron loss deteriorates and it is not preferable. In a case where the soaking temperature exceeds 1000°C, strength is insufficient and iron loss also deteriorates, and it is not preferable. The soaking temperature is more preferably in a range of 760°C to 980°C and still more preferably in a range of 770°C to 960°C. The ratio of H₂ in the atmosphere is more preferably in a range of 15 volume% to 90 volume%. The dew point of the atmosphere is more preferably 20°C or lower and still more preferably 10°C or lower.

### <Insulation coating-forming step>

An insulation coating-forming step may be performed after the final annealing. Here, the insulation coating-forming step is not particularly limited, and treatment liquid may be applied and dried by a publicly known method using publicly known insulation coating treatment liquid described above.

The surface of the base metal on which the insulation coating is to be formed may be subjected to any pretreatment, such as degreasing using an alkali or pickling using hydrochloric acid, sulfuric acid, or phosphoric acid, before the treatment liquid is applied; or may be the surface subjected to the final annealing as it is without the pretreatment.

As described above, according to this embodiment, the Si content and the Mn content are adjusted to be in appropriate ranges (that is, ranges represented by Expression (i)), so that workability can be ensured while the high strengthening of the non-oriented electrical steel sheet and the improvement of magnetic characteristics are achieved. In addition, since the average grain size of the base metal is in a range of 10 µm to 80 µm, magnetic characteristics can be improved while the strength of the non-oriented electrical steel sheet is increased even in this regard. As described above, in this embodiment, it is possible to ensure workability while achieving the high strengthening of the non-oriented electrical steel sheet and the improvement of magnetic characteristics without adding a large amount of expensive special elements, such as Ni and Cu described in Patent Document 1, Ti and V described in Patent Document 2, and Ca described in Patent Document 3. Further, an appropriate amount of low-cost Al is added in this embodiment, so that workability during cold rolling is ensured and the grain size during final annealing is easily controlled. As a result, the product yield is improved. Accordingly, it is possible to stably provide a non-oriented electrical steel sheet, which has high strength and excellent magnetic characteristics, at a low cost.

The present invention will be more specifically described below using examples but is not limited to these examples.

### [Examples]

Slabs having chemical compositions shown in Table 1 were heated to 1150°C, hot rolling was then performed at a finish temperature of 850°C and a finish sheet thickness of 2.0 mm, and the slabs were wound at 650°C, so that hot-rolled steel sheets were obtained. At some Test Nos., the obtained hot-rolled steel sheets were annealed at annealing temperatures shown in Table 2 and scale formed on the surfaces of the hot-rolled sheets was removed by pickling. All of soaking times in the annealing of the hot-rolled sheets were set to 30 s. Pickled sheets obtained in this way (pickled sheets from which the scale of the hot-rolled steel sheets were removed in a case where the annealing of the hot-rolled sheets was omitted) were formed into cold-rolled steel sheets having a sheet thickness of 0.25 mm by cold rolling.

In addition, annealing was performed in a mixed atmosphere in which H₂ was 25%, N₂ was 75%, and a dew point was 0°C so as to have average grain sizes shown in Table 2 to be described below while final annealing conditions (a soaking temperature (annealing temperature) and a soaking time) were changed. Specifically, in a case where the average grain size was increased, the soaking temperature was set to be higher and/or a soaking time was set to be longer. Further, in a case where the average grain size was decreased, the soaking temperature was set to be lower and/or the soaking time was set to be shorter. Specific soaking temperatures (annealing temperatures) and soaking times are shown in Table 2. After that, an insulation coating was applied to manufacture non-oriented electrical steel sheets and the non-oriented electrical steel sheets were used as test materials.

Further, an insulation coating consisting of phosphoric acid aluminum and acrylic-styrene copolymer resin emulsion having a grain size of 0.2 µm was applied by a predetermined adhesion amount and was baked in the air at 350°C, so that the insulation coating was formed.

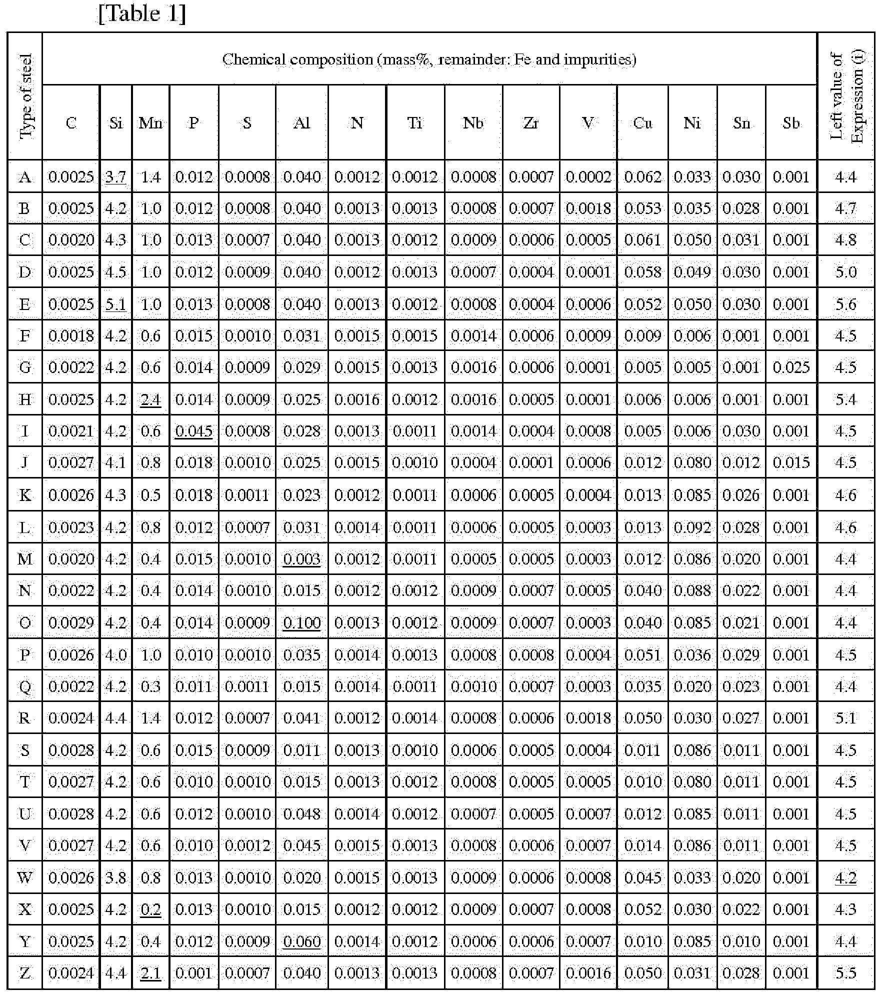

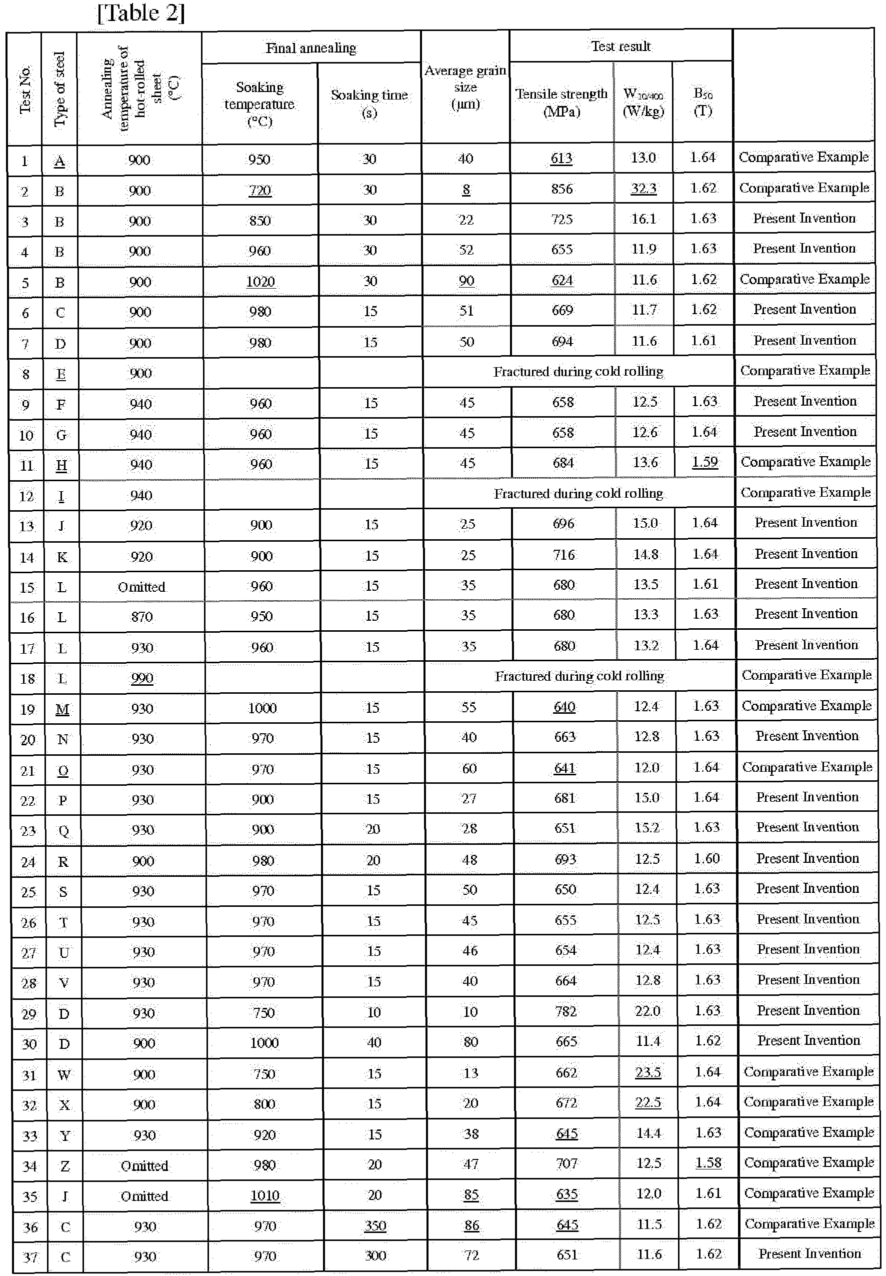

The chemical composition of each of the obtained test materials was confirmed using the above-mentioned measurement method. As a result, it could be confirmed that the chemical composition of each of the obtained test materials was substantially the same as the chemical composition of the slab. In addition, the average grain size of the base metal was measured according to JIS G 0551 (2013) "steel-grain size microscopic test method". Further, Epstein test pieces were taken in a rolling direction and a width direction of each test material, and magnetic characteristics (iron loss W_{10/400} and magnetic flux density B₅₀) were evaluated using Epstein test based on JIS C 2550-1 (2011). A magnetic flux density B₅₀ of 1.60 T or more was evaluated as an acceptable level and an iron loss W_{10/400} of 22.0 W/kg or less was evaluated as an acceptable level. Furthermore, JIS No. 5 tensile test piece was taken from each test material according to JIS Z 2241 (2011) so that a longitudinal direction coincided with the rolling direction of the steel sheet. Then, a tensile test was performed according to JIS Z 2241 (2011) using the above-mentioned test piece to measure a tensile strength. The tensile strength of 650 MPa or more was evaluated as an acceptable level. The above results are also shown in Table 2.

In Test Nos. 3, 4, 6, 7, 9, 10, 13 to 17, 20, 22 to 30, and 37 in which the chemical composition of a steel sheet and the average grain size thereof after the final annealing satisfy the regulations of the present invention, it was found that the test pieces were excellent in iron loss and magnetic flux density and particularly had low iron loss and a high tensile strength of 650 MPa or more. In particular, in a case where the content of each chemical component has a value within a preferred range, any of these characteristics tended to be further improved.

In contrast, in Test Nos. 1, 2, 5, 8, 11 to 12, 18, 19, 21, and 31 to 36 that are Comparative examples, at least one of magnetic characteristics and strength was inferior or toughness significantly deteriorates. For this reason, it was difficult to manufacture steel sheets.

Specifically, a result where a tensile strength was inferior since the Si content was lower than a regulated range in Test No. 1 was obtained. Further, in a case where Test Nos. 2 to 5 in which the chemical composition satisfies regulations were compared with each other, results where iron loss was inferior since the average grain size was smaller than a regulation in Test No. 2 and a tensile strength was inferior since the average grain size was larger than a regulation in Test Nos. 5, 35, and 36 were obtained.

Further, since the Si content exceeded a regulated range in Test No. 8, the P content exceeded a regulated range in Test No. 12, and the annealing temperature of the hot-rolled sheet exceeded a regulated range in Test No. 18, the steel sheets were fractured during cold rolling due to the deterioration of toughness and the average grain size, a tensile strength, and magnetic characteristics could not be measured. Furthermore, since the Mn content exceeded a regulated range in Test Nos. 11 and 34, results where magnetic flux density was inferior were obtained. Since the Mn content be lower than a regulated range in Test No. 32, a result where iron loss was inferior was obtained.

Since the Al content was lower than a regulated range in Test No. 19 and the Al content exceeded a regulated range in Test Nos. 21 and 33, it was difficult to adjust the average grain size. Accordingly, results where a tensile strength was inferior were obtained. Since Expression (i) was not satisfied in Test No. 31, a result where iron loss was inferior was obtained.

### [Industrial Applicability]

As described above, according to the present invention, it is possible to stably obtain a non-oriented electrical steel sheet, which has a high strength and excellent magnetic characteristics, at a low cost.

## Claims

1. A non-oriented electrical steel sheet comprising, as a chemical composition of a base metal, by mass%:
C: 0.0050% or less;
Si: 3.8% to 5.0%;
Mn: exceeding 0.2% and less than 2.0%;
P: 0.030% or less;
S: 0.0030% or less;
Al: 0.005% or more and less than 0.050%;
N: 0.0005% to 0.0030%;
Ti: less than 0.0050%;
Nb: less than 0.0050%;
Zr: less than 0.0050%;
V: less than 0.0050%;
Cu: less than 0.20%;
Ni: less than 0.50%;
Sn: 0% to 0.10%;
Sb: 0% to 0.10%; and
a remainder: Fe and impurities,
wherein Expression (i) is satisfied, and
an average grain size of the base metal is in a range of 10 to 80 µm,
Si + 0.5 × Mn ≥ 4.3 ... (i)
here, an element symbol in Expression (i) is a content (mass%) of each element.

2. The non-oriented electrical steel sheet according to claim 1,
wherein a tensile strength is 650 MPa or more.

3. The non-oriented electrical steel sheet according to claim 1 or 2,
wherein the chemical composition contains, by mass%, one or two selected from Sn: 0.005% to 0.10% and Sb: 0.005% to 0.10%.

4. The non-oriented electrical steel sheet according to any one of claims 1 to 3, further comprising:
an insulation coating that is provided on a surface of the base metal.

5. A method of manufacturing the non-oriented electrical steel sheet according to any one of claims 1 to 4, the method comprising:
performing hot rolling on a steel ingot that has the chemical composition according to any one of claims 1 to 3 and then performing the following Step 1 or 2,
(Step 1) performing cold rolling and final annealing in order without annealing of a hot-rolled sheet, and
(Step 2) performing annealing of a hot-rolled sheet at a temperature of 950°C or lower and then performing the cold rolling and the final annealing in order,
wherein the final annealing is performed in a state where a soaking temperature is in a range of 750°C to 1000°C and a soaking time is in a range of 1 to 300 s.
